# EUROPEAN PATENT SPECIFICATION

(11) **EP 0 317 280 B1**
(45) Date of publication and mention of the grant of the patent: **06.10.1993**
(21) Application number: 88310803.7
(22) Date of filing: 16.11.1988
(51) Int. Cl.: C08F 297/06, C09J 153/00, C09D 153/00

(54) **Alfa-olefin block copolymer, and adhesive and coating materials including same**
Alpha-Olefin-Blockcopolymer und Klebstoffe und Anstrichstoffe damit
Copolymère-bloc d'alpha-oléfine et compositions adhésives et de revêtement contenant ce copolymère

(30) Priority: 17.11.1987 JP 288304/87; 09.12.1987 JP 309427/87; 20.05.1988 JP 123483/88; 24.05.1988 JP 124957/88; 26.05.1988 JP 126913/88; 11.07.1988 JP 171020/88
(43) Date of publication of application: 24.05.1989
(73) Proprietor: MITSUI TOATSU CHEMICALS, Inc., Chiyoda-Ku Tokyo 100 (JP)
(72) Inventor: Asanuma, Tadashi, Takaishi-shi Osaka-fu (JP); Yamamoto, Kazuhiko, Takaishi-shi Osaka-fu (JP); Ohnaka, Junko, Moriguchi-shi Osaka-fu (JP); Tokura, Yoshiko, Wakayama-shi Wakayama-ken (JP)
(74) Representative: Harvey, David Gareth

(56) References cited:
- EP-A- 0 240 638
- US-A- 3 223 686
- PATENT ABSTRACTS OF JAPAN, vol. 12, no. 299 (C-520)[3146], 15th August 1988

## Description

This invention relates to a novel α-olefin block copolymer, more particularly a block copolymer comprising an alkenyl silane and an α-olefin, and use thereof for adhesive and coating materials.

Polymers of α-olefins are inexpensive and have relatively well-balanced properties so that they are employed for a variety of uses. With a view toward improving property balance, various improvements have been made for random or block copolymers formed by polymerizing different α-olefins with each other.

However, polymers of α-olefins are poor in adhesive property to polymers having polar groups as well as metals owing to the characteristics of their chemical structure. They also present a problem in that when a molded article of an α-olefin polymer is applied with a coating, film or the like, the coating or film is liable to peel off due to the inadequacy or absence of adhesiveness between the coating or film and the α-olefin polymer. Further, polymers of α-olefins, other than polyethylene, are disadvantageous in that they have relatively low crystallinities and therefore do not exhibit such properties as adequate rigidity.

JPA-63-068622 discloses a block copolymer of an olefin and a trialkylvinylsilane or a trialkylallylsilane which is said to possess a good balance of rigidity and impact resistance. The adhesion characteristics of the present invention are not foreshadowed by this prior document. Moreover, in the presently-claimed invention - see below - the alkenylsilane is one which possesses at least one Si-H bond; such is not suggested by this prior document.

US-A-3,323,686 discloses high molecular weight alkenylsilane polymers and teaches that their characteristic features are high melting point, high heat stability and relatively low flammability. Copolymerization of an alkenylsilane and propylene is disclosed. Polymerisation is only initiated after adding vanadium chloride, and the resulting product is a random polymer, not a block copolymer to which this invention is directed.

This invention aims to provide a material for adhesion which is capable of easy bonding, for example, by binding the α-olefin block copolymer with heat.

The invention also aims to provide a material for easy coating, a molded article of which is easy to coat on its surface and which is obtained, for example, by thermoforming the α-olefin block copolymer.

According to the present invention, there is provided an α-olefin block copolymer obtained by first polymerizing an alkenylsilane of the formula CH₂=CH-(CH₂)ₙ-Si Hₘ(R₃₋ₘ) in which n is 0 or an integer of 1-12, m is an integer of 1-3 and R denotes a phenyl group, methyl group or a chlorine atom, and then polymerizing an α-olefin in the presence of a stereoregular catalyst.

The invention comprehends materials for use as adhesives or for easy coating, wherein the alkenylsilane is first polymerized and then the α-olefin is polymerized, in the presence of a stereoregular catalyst.

α-olefin block copolymers according to this invention are excellent in adhesive and coating properties as well as in rigidity and therefore are of great industrial value.

The invention will now be explained in more detail in the following description which is given by way of non-limitative example only.

Alkenylsilanes used in the practice of this invention are represented by a general formula

CH₂ = CH - (CH₂)ₙ - Si Hₘ(R₃₋ₘ)

in which n is 0 or an integer of 1 - 12, m is an integer of 1 - 3, and R denotes a phenyl group, methyl group or chlorine atom. Exemplary alkenylsilane include for example vinylsilane, allylsilane, butenylsilane, pentenylsilane, and a compound formed by substituting hydrogen atoms in one or two Si-H groups in each molecule of these alkenyl-silanes with a phenyl group, methyl group or chlorine atom.

The α-olefin useful in the practice of this invention may include an α-olefin having from 2 to 12 carbon atoms and a mixture thereof. Such olefins include ethylene, propylene, butene-1, pentene-1 and a mixture of two or more of these compounds. In addition, it is also possible to use each of the above-described olefins or a mixture thereof by mixing with it a higher olefin such as hexene-1, octene-1 or 4-methylpentene-1 in a small amount of up to about 20 wt.% based on the total olefins.

As the stereoregular catalyst useful in the practice of this invention, may preferably be used well-known catalyst systems composed of a transition metal compound, an organoaluminium compound and optionally a stereoregularity improver such as oxygen-containing organic compounds. There is no particular limitation on the catalyst system. As exemplary literatures disclosing such a catalyst system may be mentioned: Ziegler-Natta Catalysts and Polymerization by John Boor Jr. (Academic Press), Journal of Macromolecular Science Reviews in Macromolecular Chemistry and Physics, C24(3) 355 - 385 (1984), ibid. C25(1) 578 - 597 (1985).

For the transition metal compound, preferably titanium halides are used, for example, titanium trichloride obtained by reducing titanium tetrachloride with metallic aluminium, hydrogen or an organoaluminium compound, or those obtained by modifying the titanium trichloride with an electron donor. There may also be cited a transition metal compound obtained by carrying a titanium halide on a carrier such as magnesium halides or on those obtained by treating the carrier with an electron donor.

The organoaluminium compound may include a trialkylaluminium, dialkylaluminium halide, alkylaluminium sesquihalide or alkylaluminium dihalide. Illustrative examples of the above-described alkyl group may embrace methyl, ethyl, propyl, butyl and hexyl groups, while as the halogen group may be mentioned chlorine, bromine and iodine.

Preferred examples of the stereoregularity improver and the electron donor may generally include oxygen-containing compounds such as ethers, esters, orthoethers and alkoxy-silicon compounds. Further, alcohols, aldehydes and water may be used as the electron doner.

The polymerization ratio of an alkenylsilane to an α-olefin in the α-olefin block copolymer of this invention is , by way of example, generally in the range of 1:10 - 1:1,000,000, preferably in the range of 1:20 - 1:1,000,000 by weight.

It is preferable to conduct the polymerization of an alkenylsilane in accordance with the solvent polymerization or vapor-phase polymerization process. In the polymerization of an alkenylsilane, it is effective to use well-known processes and conditions for polymerizing α-olefins. Specifically, polymerization of an alkenylsilane is generally conducted at a temperature of from 0°C to 200°C, preferably from room temperature to 150°C under a pressure of from atmospheric pressure to the vapor pressure of the alkenylsilane at the polymerization temperature.

No particular restrictions are imposed on the polymerization process to be adopted for polymerizing an α-olefin. The bulk polymerization and vapor-phase polymerization processes may also be employed in addition to the solvent process in which an inert solvent is used.

As the temperature and pressure for the polymerization of an α-olefin, the conditions known in the art and employed in the polymerization of ordinary α-olefins may be used without modification. The temperature and pressure conditions are generally in the range of from 0°C to 200°C and from atmospheric pressure to 150 kg/cm², preferably in the range of from room temperature to 150°C and from atmospheric pressure to 100 kg/cm², respectively.

Upon polymerizing an α-olefin subsequent to the polymerization of an alkenylsilane, it is a common practice to remove first unreacted alkenylsilane and then polymerize the α-olefin. However, it is also possible to conduct the polymerization by introducing an α-olefin onto unreacted alkenylsilane.

No particular limitation is placed on the molecular weight of the polymer and hence the molecular weight may be determined in accordance with the purpose of use. A desired molecular weight can be obtained by means of the well-known method of adding hydrogen to regulate the molecular weight. The desired molecular weight varies to some extent depending on the cases, for example, where an α-olefin block copolymer is used as it is a material for molding (such as injection molding), where it is used as a material for adhesion (such as laminating adhesion) and where it is used as a material for easy coating, a molded article of which is suitable for surface coating.

Generally speaking, however, it is usual to obtain a desired molecular weight of the polymer by adjusting its intrinsic viscosity measured at 135°C in a tetralin solution to about 0.1 - 5 dl/g, or to about 0.05 - 3 dl/g when it is used as a blend with other polyolefins.

The α-olefin block copolymers according to this invention can be used by blending with other polyolefins for some of the above-described uses. As another polyolefin to be blended for use, it is possible to employ homopolymers and random or block copolymers of α-olefins which are illustrated above and obtained in accordance with an ordinary polymerization process in the presence of an ordinary catalyst as used in this invention.

There is no particular limitation on the mixing procedure employed upon mixing the copolymer with another polyolefin so as to utilize them as a composition. Such a conventional procedure as premixing them in a Henschel mixer and melt-blending the resulting mixture in an extruder, followed by granulation, would be sufficient. It is also feasible to heat them upon mixing in a Henschel mixer or to mix them by means of a roll. In the mixing, it is of course possible to include various well-known additives such as stabilizers.

The α-olefin block copolymer according to this invention may be utilized as a material for adhesion. Specifically, the aforementioned polymer may be employed as an adhesive for a polar group-containing polymer, for example, polyamide, polyester, polyether or ethylene-vinyl alcohol copolymer, or a metal, for example, aluminium, steel sheet, soft iron sheet or galvanized iron sheet. In this case, the copolymer may be used by diluting it with other polyolefins, as described above. As regards the degree of dilution, it is a common practice upon utilization as an adhesive polyolefin to allow an alkenylsilane to be present to such a degree that the alkenylsilane units are contained in the total composition in an amount of about 1 weight % - 10 weight ppm. In this case, it can use the same polyolefin as that to be bonded.

The material for adhesion of this invention is generally used in such a way that it is held between the layers of a polyolefin and a polar group-containing polymer to bind the two layers. However, it is also possible to use the material as a formation composed of a polyolefin layer and other material layer, the polyolefin layer being formed by using an α-olefin block copolymer of this invention as it is or by mixing it with other polyolefin.

The α-olefin block copolymer according to this invention may also be utilized as a material for easy coating. In coating, the above-described composition for adhesion can be used without modification. However, the composition may be used by adding to it a compound well-known in the art as a siloxane condensation catalyst, such as an organic acid or salt thereof, an organic base, an alkoxy compound, hydroxide or oxide of alkali metals or alkaline earth metals, or a tin or lead salt of carboxylic acids so as to improve its adhesive property.

In general, the material for easy coating of this invention is first formed into a desired shape and is then utilized for the use of being applied with a coating. No particular restrictions are imposed on the coating to be used for this purpose. Urethane coatings, and acrylic coatings, inter alia may be used by way of example.

### Example 1:

Provided was an oscillating mill equipped with 4 grinding pots which contained 9 kg of steel balls having a diameter of 12 mm and had an inner volume of 4 ℓ. Into each pot, 300 g of magnesium chloride, 60 ml of tetraethoxysilane and 45 ml of α,α,α-trichlorotoluene were added and they were ground for 40 hours in an atmosphere of nitrogen. The ground mixture thus-obtained (300 g) was charged into a 5 ℓ-flask and 1.5ℓ of titanium tetrachloride and 1.5ℓ of toluene were added and the mixture was stirred at 100°C for 30 minutes. The supernatant was removed. To the resulting mixture 1.5ℓ of titanium tetrachloride and 1.5ℓ of toluene were added, followed by stirring at 100°C for 30 minutes. The resultant supernatant was removed and the solid portion was washed repeatedly with n-hexane, thereby obtaining a transition metal compound slurry. A part of the solid portion was taken out as a sample and its titanium content was analyzed. It was found to be 1.9 weight %.

Into a pressure-tight glass autoclave having an inner volume of 200 ml were introduced 40 ml of toluene, 20 mg of the above-described transition metal compound, 0.128 ml of diethylaluminium chloride, 0.06 ml of p-methyl toluate and 0.03 ml of triethylaluminium in an atmosphere of nitrogen. The resultant mixture was combined with 0.5 g of vinylsilane, and subjected to polymerization under stirring at 20°C for 60 minutes. Then, 0.05 ml of triethylaluminium was added and the resultlng slurry was fed into an autoclave having an inner volume of 5ℓ, to which 1.8 kg of propylene and 3.3Nl of hydrogen were added. The resultant mixture was subjected to polymerization reaction at 75°C for 2 hours. After the polymerization reaction, unreacted propylene was purged to obtain a polymer, which was then dried at 80°C and 60 mmHg for 12 hours. Powder of a block copolymer (380 g) was obtained and its intrinsic viscosity (hereinafter abbreviated as η) was measured at 135°C in a tetralin solution. Further, the rate of extraction residue (hereinafter abbreviated as II) was determined when the powder was extracted with boiling n-heptane for 6 hours in a Soxhlet's extracter. The result was given in terms of the weight percentage of the powder after extraction to the powder before extraction. In a model polymerization, the amount of vinylsilane polymerized was measured per unit amount of the transition metal compound. It was found to be 2.4 g equivalent. The conversion of vinylsilane was 10% in the polymerization.

The polymerization was repeated 20 times in the same manner to obtain about 6 kg of powder. A phenol type stabilizer and calcium stearate were added to a part of the powder in the weight ratios of 10 to 10,000 and 15 to 10,000 respectively, and the resulting mixture was granulated to prepare an injection sheet having a thickness of 1 mm. Then, the flexural stiffness of the sheet was measured. Further, the melting point and crystallizing temperature were measured as maximum peak temperatures by ascending or descending the temperature at a rate of 10°C/min. by means of a differentialthermal analysis instrument.

The melting point was 160°C, the crystallizing temperature was 122.5°C, the melt flow index [according to ASTM D1238(230°C); hereinafter abbreviated as MI] was 7.8 g/10 min., and the flexural stiffness [according to ASTM D747-63(20°C)] was 12,100 kg/cm².

In order to determine the strength of adhesion, a sheet of Eval (product of Kuraray Co., Ltd., EP-F) having a thickness of 0.2 mm was put upon a sheet formed by injection-molding the above-described powder and having a thickness of 0.2 mm, and the resulting sheets were pressed at 220°C and 4 g/cm² for 3 minutes. The peel strength of the piled sheets was determined. It was found to be more than 2 kg/cm.

### Measurement of peel strength:

The T-type peel strength was measured for a specimen having a width of 2.5 cm at 23°C and a pulling rate of 100 mm/min. by the use of an Instron tensile testing machine.

To determine the strength of coating, the aforesaid granulated product was further compression-molded at 220°C and 40 kg/cm² to obtain a sheet having a thickness of 1 mm. Specimens of the sheet were separately coated with two kinds of coatings [Olestar Q 182 (trade name: product of Mitsui Toatsu Chemicals, Inc.) as a urethane coating and Unirock (trade name: product of Rock Paint, Inc.) as an acrylic coating] with brush. Then, the specimens were dried in an air oven at 60°C for 30 minutes. The strength of adhesion of the coated film was measured for the specimens applied with the coatings according to the procedure of JIS K-5400 (the cross hatch test). The number of cross-cut residual coated films were respectively as excellent as 80 and 95 out of 100.

The amount of polymerized vinylsilane in the polypropylene was calculated by analyzing silicon, and found to be 140 ppm.

### Comparative Example 1:

Propylene was polymerized in the same manner as in Example 1 except that vinylsilane was not used, whereby 475 g of polypropylene was obtained. Using the polypropylene, evaluation was made in the same manner as in Example 1. The MI was found to be 6.1 g/min., the crystallizing temperature was 110.5°C, the melting point was 160°C, the flexural stiffness was 11,200 kg/cm², the adhesive property was judged as the numbers of cross-cut residual coated films were respectively 5 and 10 out of 100, the both numbers being evaluated as poor.

### Example 2:

A commercially-available highly-active titanium trichloride (product of Toho Titanium Co., TAC S-21) was used as a transition metal compound. In 40 ml of toluene, 100 mg of the titanium trichloride, 1.0 ml of diethylaluminum chloride and 0.5 g of vinylsilane were subjected to polymerization at 30°C for 30 minutes. The resulting slurry was charged into an autoclave having an inner volume of 5 ℓ, to which 1.8 kg of propylene and 4.4 Nl of hydrogen were added. Polymerization was conducted at 75°C for 1 hour to obtain 265 g of block copolymer. The block copolymer was treated with heat at 100°C for 1 hour in the presence of 10 ml of propylene oxide as activator. The analysis of the resulting block copolymer revealed the polymerization of 720 ppm of vinylsilane. Similar polymerization was repeated 20 times to obtain about 5 kg of the polymer.

Then, propylene was separately polymerized to obtain polypropylene having an η of 1.65 and a II of 97.1%. Polymerization was repeated similarly to obtain about 10 kg of the polymer. To 200 g of the polypropylene powder were added 40 g of the above-described block copolymer, a phenol-type stabilizer in the weight ratio of 10 to 10,000 (based on the polypropylene) and calcium stearate in the weight ratio of 15 to 10,000 (based on the polypropylene). The mixture thus-formed was granulated to prepare a material of this invention. The material had an MI of 7.8 g/10 min., a crystallizing temperature of 120.8°C, a melting point of 160.1°C and a flexural stiffness of 2,200 kg/cm². The material was evaluated as a material for adhesion in the same manner as in Example 1. It was found to have a peel strength of more than 2 kg/cm². The material was also evaluated as a material for coating in the same manner as in Example 1. The numbers of cross-cut residual coated films were respectively as excellent as 90 and 95 out of 100.

### Comparative Example 2:

Evaluation was made using the homopolymer of propylene obtained in Example 2 in place of the block copolymer of vinylsilane. It had an MI of 8.5 g/min., a melting point of 160.5°C and a crystallizing temperature of 112.5°C. The flexural stiffness of its injection sheet was 10,900 kg/cm² and the adhesive property thereof was judged. The numbers of cross-cut residual coated films were respectively as poor as 5 and 10 out of 100.

### Example 3:

A propylene-ethylene copolymer containing 3.5 wt.% of ethylene and having an η of 1.88 was obtained by conducting the polymerization in the presence of a small quantity of ethylene in the same manner as in Comparative Example 1. To 200 g of the copolymer powder were added 20 g of the block copolymer comprising vinylsilane and propylene obtained in Example 2, a phenol-type stabilizer in the weight ratio of 10 to 10,000 (based on the polyolefin) and calcium stearate in the weight ratio of 15 to 10,000 (based on the polyolefin). The resulting mixture was granulated to obtain a material for coating. Using this material for easy coating, evaluation was made in the same manner as in Example 1. The numbers of cross-cut residual films were respectively found to be as high as 85 and 90 out of 100.

### Example 4:

Polymerization was conducted in the same manner as in Example 1 except for the use of allylsilane instead of vinylsilane. The resultant copolymer contained 180 ppm of allylsilane. The MI of the copolymer was 7.5 g/10 min., the crystallizing temperature was 123.5°C, the melting point was 160.5°C, the flexural stiffness was 12,300 kg/cm², the peel strength was more than 2 kg/cm, and the numbers of cross-cut residual coated films were respectively 95 and 100 out of 100, the both numbers being estimated as excellent.

### Example 5:

In order to determine the strength of adhesion between the sheet obtained in Example 1 and aluminium, an aluminium plate of 100 µm-thickness degreased with acetone was piled on the sheet in the order of aluminium plate-sheet-aluminium plate. The resulting formation was pressed at 230°C under 10 kg/cm² for 10 minutes. Thereafter, it was cooled with water to obtain a laminated plate. The T-type peel strength of the laminated plate was 1.6 kg/cm. When a soft iron sheet was used in place of the aluminium plate, the resulting laminated plate exhibited a T-type peel strength of 1.5 kg/cm.

### Example 6:

Following the procedure of Example 1, vinylsilane was first polymerized, followed by copolymerization of ethylene and butene-1 in a hexane solvent. The copolymerization was conducted at a polymerization temperature of 70°C under the total pressure of 10 kg/cm² and an initial hydrogen partial pressure of 3 kg/cm² until the amount of ethylene feed reached 400 g, thereby obtaining an ethylene copolymer containing 8 weight % of butene-1. Using the copolymer, evaluation was made in the same manner as in Example 5. The T-type peel strength was found to be as good as 1.8 kg/cm². The copolymer contained 135 ppm of vinylsilane and had an MI of 15 g/10 min. at 190°C.

## Claims

1. An α-olefin block copolymer obtained by first polymerizing an alkenylsilane of the formula CH₂=CH-(CH₂)ₙ-Si Hₘ(R₃₋ₘ) in which n is 0 or an integer of 1-12, m is an integer of 1-3 and R denotes a phenyl group, methyl group or a chlorine atom, and then polymerizing an α-olefin in the presence of a stereoregular catalyst.

2. The copolymer according to claim 1, wherein the weight ratio of the alkenylsilane to the α-olefin is in the range of from 1:10 to 1:1,000,000.

3. The copolymer according to claim 1 or claim 2, wherein the alkenylsilane is one or two or more compounds selected from vinylsilane, allylsilane, butenylsilane, pentenylsilane and a compound formed by substituting hydrogen atom in one or two Si-H groups in each molecule of these alkenylsilanes with a phenyl group, methyl group or chlorine atom.

4. The copolymer according to claim 1, 2 or 3, wherein the α-olefin is one or two or more compounds selected from ethylene, propylene, butene-1 and pentene-1.

5. The copolymer according to any of claims 1 to 4, wherein the α-olefin further includes one or two or more compounds selected from hexene-1. octene-1 and 4-methylpentene.

6. The copolymer according to any of claims 1 to 5, wherein the stereoregular catalyst comprises a transition metal compound, an organoaluminium compound, and optionally a stereoregularity improver selected from oxygen-containing organic compounds, the transition metal compound for example being a titanium halide.

7. The copolymer according to any of claims 1 to 6, wherein the alkenylsilane is polymerized by the solvent polymerisation process or the vapor-phase polymerization process at a temperature of 0 - 200°C.

8. The copolymer according to any of claims 1 to 7, wherein the molecular weight of the α-olefin block copolymer is in the range of 0.1 - 5 dl/g in terms of intrinsic viscosity measured in a tetralin solution at 135°C.

9. The copolymer according to any of claims 1 to 7, wherein the molecular weight of the α-olefin block copolymer is in the range of 0.05 - 3 dl/g in terms of intrinsic viscosity measured in a tetralin solution at 135°C.

10. A polymer composition comprising the block copolymer according to any of claims 1 to 9, and an α-olefin homo- or co-polymer which does not contain an alkenylsilane.

11. The polymer composition according to claim 10, wherein the alkenylsilane units are present in the total composition in an amount in the range of from 1 weight percent to 10 weight ppm.

12. The use of the block copolymer according to any of claims 1 to 9 or the polymer composition according to claim 10 or claim 11 either as a material to adhere to a polyolefin, a metal or a polar group-containing polymer, or as an easily coated molded article or as an easy coating material.

## Patentansprüche

1. Ein α-Olefin-Blockcopolymer, das dadurch erhalten wird, daß zuerst ein Alkenylsilan der Formel CH₂=CH-(CH₂)ₙ-Si Hₘ(R₃₋ₘ), in der n 0 oder eine ganze Zahl von 1-12 ist, m eine ganze Zahl von 1-3 ist und R eine Phenylgruppe, Methylgruppe oder ein Chloraton bezeichnet, polymerisiert wird und dann ein α-Olefin in Anwesenheit eines stereoregulären Katalysators polymerisiert wird.

2. Das Copolymer nach Anspruch 1, bei dem das Gewichtsverhältnis des Alkenylsilans zu dem α-Olefin in dem Bereich von 1:10 bis 1:1.000.000 liegt.

3. Das Copolymer nach Anspruch 1 oder Anspruch 2, bei dem das Alkenylsilan aus einer Verbindung oder zwei oder mehr Verbindungen besteht, die aus Vinylsilan, Allylsilan, Butenylsilan, Pentenylsilan und einer Verbindung, die durch Substituieren von Wasserstoffatom in einer oder zwei Si-H-Gruppen in jedem Molekül dieses Alkenylsilans mit einer Phenylgruppe, Methylgruppe oder einem Chloratom gebildet ist, ausgewählt ist bzw. sind.

4. Das Copolymer nach Anspruch 1, 2 oder 3, bei dem das α-Olefin aus einer Verbindung oder aus zwei oder mehr Verbindungen besteht, die aus Äthylen, Propylen, Buten-1 und Penten-1 ausgewählt sind.

5. Das Copolymer nach einem der Ansprüche 1 bis 4, bei dem das α-Olefin weiterhin eine Verbindung oder zwei oder mehr Verbindungen umfaßt, die aus Hexen-1, Octen-1 und 4-Methylpenten ausgewählt sind.

6. Das Copolymer nach einem der Ansprüche 1 bis 5, bei dem der stereoreguläre Katalysator eine Übergangsmetallverbindung, eine Organoaluminiumverbindung und wahlweise einen Stereoregularitätsverbesserer umfaßt, der aus sauerstoffhaltigen organischen Verbindungen ausgewählt ist, wobei die Übergangsmetallverbindung z.B. ein Titanhalogenid ist.

7. Das Copolymer nach einem der Ansprüche 1 bis 6, bei dem das Alkenylsilan durch das Lösungsmittel-Polymerisationsverfahren oder das Dampfphasen-Polymerisationsverfahren bei einer Temperatur von 0 - 200°C polymerisiert ist.

8. Das Copolymer nach einem der Ansprüche 1 bis 7, bei dem das Molekulargewicht des α-Olefin-Blockcopolymeren in dem Bereich von 0,1 - 5 dl/g in Werten der Grundviskosität, gemessen in einer Tetralinlösung bei 135°C, liegt.

9. Das Copolymer nach einem der Ansprüche 1 bis 7, bei dem das Molekulargewicht des α-Olefin-Blockcopolymeren in dem Bereich von 0,05 - 3 dl/g in Werten der Grundviskosität, gemessen in einer Tetralinlösung bei 135°C, liegt.

10. Eine Polymerzusammensetzung, die das Blockcopolymer nach einem der Ansprüche 1 bis 9 und ein α-Olefin-Homo- oder -Copolymer, das kein Alkenylsilan enthält, umfaßt.

11. Die Polymerzusammensetzung nach Anspruch 10, bei der die Alkenylsilaneinheiten in der Gesamtzusammensetzung in einer Menge in dem Bereich von 1 Gew.-% bis 10 Gew.-ppm vorhanden sind.

12. Verwendung des Blockcopolymeren nach einem der Ansprüche 1 bis 9 oder der Polymerzusammensetzung nach Anspruch 10 oder Anspruch 11 entweder als ein Material zum Kleben eines Metalles oder eines polare Gruppen enthaltenden Polymeren an ein Polyolefin oder als einen leicht zu beschichtenden ausgeformten Gegenstand oder als ein leicht zu beschichtendes Material.

## Revendications

1. Un copolymère séquencé d'α-olèfine, obtenu d'abord par polymérisation d'un alcénylsilane de formule CH₂=CH-(CH₂)ₙ-SiHₘ(R₃₋ₘ) dans laquelle n est 0 ou un entier de 1 à 12, m est un entier de 1 à 3 et R représente un groupe phényle, un groupe méthyle ou un atome de chlore, puis polymérisation d'une α-oléfine en présence d'un catalyseur stéréorégulier.

2. Le copolymère selon la revendication 1, dans lequel le rapport pondéral de l'alcénylsilane à l'α-oléfine est dans la gamme de 1/10 à 1/1 000 000.

3. Le copolymère selon la revendication 1 ou la revendication 2, dans lequel l'alcénylsilane est un, deux ou plusieurs composés choisis parmi le vinylsilane, l'allylsilane, le buténylsilane, le penténylsilane et un composé formé par remplacement d'un atome d'hydrogène dans un ou deux groupes Si-H de chaque molécule de ces alcénylsilanes par un groupe phényle, un groupe méthyle ou un atome de chlore.

4. Le copolymère selon la revendication 1, 2 ou 3, dans lequel l'α-oléfine est un, deux ou plusieurs composés choisis parmi l'éthylène, le propylène, le butène-1 et le pentène-1.

5. Le copolymère selon l'une quelconque des revendications 1 à 4, dans lequel l'α-oléfine comprend de plus un ou deux ou plusieurs composés choisis parmi l'hexène-1, l'octène-1 et le 4-méthylpentène.

6. Le copolymère selon l'une quelconque des revendications 1 à 5, dans lequel le catalyseur stéréorégulier comprend un composé de métal de transition, un composé organoaluminique et facultativement un agent améliorant la stéréorégularité choisi parmi les composés organiques oxygénés, le composé de métal de transition étant par exemple un halogénure de titane.

7. Le copolymère selon l'une quelconque des revendications 1 à 6, dans lequel on polymérise l'alcénylsilane selon un procédé de polymérisation dans un solvant ou le procédé de polymérisation en phase vapeur, à une température de 0 à 200°C.

8. Le copolymère selon l'une quelconque des revendications 1 à 7, dans lequel le poids moléculaire du copolymère séquencé d'α-oléfine est dans la gamme de 0,1 à 5 dl/g en termes de viscosité intrinsèque, mesurée en solution dans la tétraline à 135°C.

9. Le copolymère selon l'une quelconque des revendications 1 à 7, dans lequel le poids moléculaire du copolymère séquencé d'α-oléfine est dans la gamme de 0,05 à 3 dl/g en termes de viscosité intrinsèque, mesurée en solution dans la tétraline à 135°C.

10. Une composition polymère comprenant le copolymère séquencé selon l'une quelconque des revendications 1 à 9 et un homo- ou copolymère d'α-oléfine qui ne contient pas un alcénylsilane.

11. La composition polymère selon la revendication 10, dans laquelle les motifs d'alcénylsilane sont présents dans la composition totale en une proportion dans la gamme de 1 % en poids à 10 ppm en poids.

12. L'utilisation du copolymère séquencé selon l'une quelconque des revendications 1 à 9 ou de la composition polymère selon la revendication 10 ou la revendication 11 soit comme matière pour adhérer à une polyoléfine, à un métal ou à un polymère contenant un groupe polaire, soit comme article moulé facile à revêtir soit comme matériau assurant un revêtement facile.
